# EUROPÄISCHE PATENTSCHRIFT

(11) **EP 2 520 171 B1**
(45) Veröffentlichungstag und Bekanntmachung des Hinweises auf die Patenterteilung: **26.06.2019**
(21) Anmeldenummer: 12166037.7
(22) Anmeldetag: 27.04.2012
(51) Int. Cl.: A21D 2/02, A21D 10/00

(54) **Mehlverbesserer**
Flour improver
Améliorant pour farine

(30) Priorität: 04.05.2011 DE 102011075239
(43) Veröffentlichungstag der Anmeldung: 07.11.2012
(73) Patentinhaber: Chemische Fabrik Budenheim KG, 55257 Budenheim (DE)
(72) Erfinder: Kroning, Christian, 61381 Friedrichsdorf (DE); Rath, Gideon, 64285 Darmstadt (DE); Schnee, Rainer, 55130 Mainz (DE)
(74) Vertreter: WSL Patentanwälte Partnerschaft mbB

(56) Entgegenhaltungen:
- WO-A1-2011/057987
- DE-C- 928 581
- DE-T2- 69 430 033
- US-A- 3 852 497
- US-A1- 2007 281 056

## Beschreibung

Die Erfindung betrifft die Verwendung eines Mehlverbesserers zur Herstellung von durch Fermentation gelockerten Teigen oder physikalisch gelockerten Teigen für Backwaren und Zusammensetzung, welche den Mehlverbesserer enthalten.

### Hintergrund der Erfindung

Die Backeigenschaften von Getreidemehlen, insbesondere Weizenmehlen variieren sehr stark. Faktoren, welche die Backeigenschaften von Mehlen beeinflussen, sind beispielsweise das Klima und die Bodenbeschaffenheit, unter denen das Getreide angebaut wird, und die jeweilige Sorte. Der Bäcker im handwerklichen Betrieb kann Schwankungen der Mehleigenschaften bis zu einem gewissen Maß durch Rezeptur und Backführung ausgleichen. In der industriellen Herstellung von Backwaren müssen die Backeigenschaften der Rohstoffe aber weitestgehend konstant sein, damit der Prozess gleichmäßig ablaufen kann.

Gluten, Kleber oder Klebereiweiß bezeichnen einen Oberbegriff für Getreideeiweiße. Sie bestehen aus zwei Fraktionen, von denen eine alkohollöslich ist. Jede Getreidesorte besitzt leicht unterschiedliche Glutene, deren alkohollösliche Glutenfraktionen meist unterschiedlich benannt werden, z. B. Gliadin (= Weizengluten), Secalin (= Roggengluten) und Hordein (= Gerstengluten). Der Glutenanteil eines Mehls ist ein entscheidender Faktor für die Backeigenschaften eines Getreidemehls. Bäcker sprechen in diesem Zusammenhang von kleberschwachem Mehl mit einem niedrigen Glutenanteil oder kleberstarkem Mehl mit einem hohen Glutenanteil. Bei der Teigzubereitung nehmen die Glutene Wasser auf, d. h. sie quellen. Dabei verbindet sich das Eiweiß zu einer zähen und dehnbaren Masse, dem Kleber. Der Glutenanteil beeinflusst beispielsweise die Wasserbindung im Teig, die Krumenbildung, die Krustenbildung, die Elastizität des Teiges, wie Dehnbarkeit und Dehnwiderstand, die Knettoleranz, die Gärstabilität, das Gebäckvolumen und die Frischhaltung von Gebäck. Diese Parameter sind insbesondere wichtig für die Herstellung von Brot und Brötchen.

Zur Einstellung der Backeigenschaften von Getreidemehlen werden verschiedene Zusätze verwendet. Bei kleberschwachen Mehlen führt der Zusatz von oxidierenden Stoffen wie Bromat oder der reduzierenden Ascorbinsäure, die bei der Teigbereitung zur oxidierenden Dehydroascorbinsäure umgewandelt wird, zu einer Stärkung des Klebers. Jedoch ist die Anzahl der zur Verfügung stehenden Oxidationsmittel begrenzt. Ascorbinsäure benötigt ein besonders intensives Kneten des Teiges, um genügend Luftsauerstoff in den Teig zu bringen, der für die Oxidationsreaktion benötigt wird. Der Zusatz von Bromat ist zumindest in Deutschland schon lange verboten. Auch enzymatisch aktive Zusätze wie die Lipoxigenase aus Sojamehl führen zur Verbesserung der Kleberstärke.

Vor allem in Gebäcken mit einem hohen Mehlanteil bewirkt die Kleberstärkung am ehesten die Verbesserung der Backeigenschaften. Backwaren, bei denen die Stärkeverkleisterung eine entscheidende Rolle spielt, profitieren weniger von diesem Mechanismus. Deshalb sind diese Mehlverbesserer gerade für fermentierte und physikalisch gelockerte Teige von Bedeutung. Bei chemisch getriebenen Teigen ist keine durchgehende Kleberstruktur gewünscht, sie würde die Gas- und Volumenentwicklung in der Backphase eher stören. Aus diesem Grunde wird bei chemisch getriebenen Teigen ein größerer Anteil Stärke verwendet bzw. kleberschwaches Mehl eingesetzt.

DE 69430 033 T2 betrifft Treibmittelzusammensetzungen und Systeme, bei denen diese Zusammensetzungen verwendet werden. Die Treibmittelzusammensetzungen umfassen einen Carbonatfaktor und Dimagnesiumphosphat, wobei das Dimagnesiumphosphat ein Gemisch aus Dimagnesiumphosphattrihydrat und amorphem Dimagnesiumphosphat und gegebenenfalls Magnesiumpyrophosphat ist.

US 3 852 497 A betrifft ein Getreide enthaltendes Nahrungsmittel, das mit etwa 0,02 bis etwa 0,5 Gew-% einer Magnesiumverbindung in partikulärer Form angereichert ist, wobei die Magnesiumverbindung ausgewählt ist aus der Gruppe, bestehend aus Magnesiumoxid, Magnesiumphosphat, Magnesiumkaliumphosphat, Magnesiumpyrophosphat, Magnesiumhydrogenphosphat und Mischungen der vorgenannten.

DE 928 581 C beschreibt ein Verfahren zur Erhöhung der Backfähigkeit von Mehlen, dadurch gekennzeichnet, dass dem Mehl, gegebenenfalls im Gemisch mit anderen Mehlverbesserungs- oder Füllmitteln, saure Pyrophosphate des Calciums oder des Magnesiums zugesetzt werden.

US 2007/281056 A1 betrifft mit Mineralien verstärkte mehlhaltige Produkte, wie zum Beispiel Brot, Vormischungen zum Erzielen einer Verstärkung und Verfahren zu deren Herstellung. Als Mineralien werden beispielsweise die sauren Pyrophosphate des Calciums oder des Magnesiums zugesetzt.

WO 2011/057987 A1 betrifft ein Produkt, welches saures Magnesiumpyrophosphat (Magnesiumdihydrogendiphosphat) und wenigstens Magnesiumorthophosphat enthält, herstellbar durch Entwässern einer wässrigen Lösung oder Suspension einer Magnesiumphosphatverbindung mit einem Molverhältnis von Mg:P von 0,4 - 0,6 : 1, wobei das Produkt einen Glühverlust von 7,5 bis 13,5 % aufweist.

### Aufgabe der Erfindung

Die Aufgabe der vorliegenden Erfindung bestand darin, einen Mehlverbesserer bereitzustellen, der den Kleber stärkt, gut verarbeitbar ist und kurze, gut verarbeitbare Teige erzeugt.

### Beschreibung der Erfindung

Gelöst wird diese Aufgabe erfindungsgemäß durch die Verwendung eines Mehlverbesserers zur Herstellung von durch Fermentation gelockerten Teigen oder physikalisch gelockerten Teigen für Backwaren oder zur Herstellung von Mehl, wobei der Mehlverbesserer saures Magnesiumpyrophosphat (Magnesiumdihydrogendiphosphat) und wenigstens Magnesiumorthophosphat enthält, einen Glühverlust von 7,5 bis 13,5 %, vorzugsweise von 9 bis 11,5 % aufweist und 30 bis 99 Gew.-% Pyrophosphat-P₂O₅ und 1 bis 70 Gew.-% Orthophosphat-P₂O₅ enthält, wobei sich die Gewichtsprozentangaben auf den Gesamt-P₂O₅-Gehalt im Mehlverbesserer beziehen..

Der Mehlverbesserer kann allen backfähigen Mehlen hinzugefügt werden, z.B. Weizen-, Roggen-, und Dinkelmehlen. Gegenüber Ascorbinsäure als dem am häufigsten eingesetzten Mehlverbesserer hat der erfindungsgemäß verwendete Mehlverbesserer den Vorteil, dass er sich besser in den Teig einarbeiten lässt und überraschenderweise vergleichbare oder bessere Backergebnisse erzielt. Zudem führt er dem Körper beim Verzehr der damit hergestellten Backwaren Magnesium zu und kann damit eine vorteilhafte Nahrungsergänzung darstellen.

Der Mehlverbesserer führt zu einer Verbesserung der Backeigenschaften, insbesondere liefert er einen erhöhten Dehnwiderstand, höhere Knettoleranz und Gärstabilität des Teiges. Auch Gebäckvolumen und Krumenstruktur verbessern sich. Die Krume wird weicher und wirkt frischer. Die Klebrigkeit der Teige nimmt ab. Auch die Stabilität gegen Frostschäden und Verlust der Backfähigkeit beim Einsatz von Gärunterbrechung oder beim Tiefgefrieren von grünen (frischen) oder vorgegarten Teiglingen wird durch den erfindungsgemäßen Mehlverbesserer erhöht.

Der Mehlverbesserer kann alleine zu den Hauptbestandteilen eines Teiges wie Mehl, Wasser, Salz und Hefe hinzugesetzt werden oder in Kombination mit anderen Backmitteln oder Mehlverbesserern, wie beispielsweise Ascorbinsäure, Emulgatoren, Enzymen etc. Er kann auch Bestandteil eines Backmittels, eines Premixes oder einer Backmischung sein. Unter Backmitteln versteht man Additive, die die Produktion von Backwaren ermöglichen oder vereinfachen und die variierenden Prozesseigenschaften der Rohmaterialien ausgleichen. Der Begriff Backmittel umfasst auch eine Mischung mehrerer oder aller erforderlichen Additive. Bei einem Premix handelt es sich um eine Vormischung, der zur Herstellung des Teiges das Mehl noch hinzugefügt wird.

Der erfindungsgemäß verwendete Mehlverbesserer ist keine Reinsubstanz, sondern ein Stoffgemisch, das herstellungsbedingt wenigstens saures Magnesiumpyrophosphat und Magnesiumorthophosphat enthält. Wenn hierin von Anteilen oder Gewichtsprozent (Gew.-%) Pyrophosphat-P₂O₅ oder Orthophosphat-P₂O₅ die Rede ist, dann bezieht sich dies jeweils auf den als Pyrophosphat bzw. Orthophosphat vorliegenden P₂O₅-Anteil relativ zum Gesamt-P₂O₅-Gehalt in dem Produkt, wobei dem Fachmann klar ist, dass die Angabe "P₂O₅" hier als die auf dem Gebiet übliche rechnerische Bezugsgröße zur Angabe des Phosphatgehaltes ist.

Der Glühverlust des Mehlverbesserers liegt im Bereich von 7,5 bis 13,5 %. In einer bevorzugten Ausführungsform der Erfindung weist der erfindungsgemäße Mehlverbesserer einen Glühverlust von 9 bis 11,5 % auf. Ein zu niedriger Glühverlust hat den Nachteil, dass ein Anteil an langkettigen Magnesiumphosphaten entsteht. Ein zu hoher Glühverlust hat den Nachteil, dass das Produkt bei der Lagerung zur Verklumpung neigt. Die Bestimmung des Glühverlustes erfolgt, indem man circa 2 g Probe bei 800°C für 30 min glüht und den Massenverlust beim Glühen bestimmt.

### Teig

Im Sinne der vorliegenden Anmeldung umfasst der Begriff "Teig" sowohl Teige als auch Massen, wie sie vom Fachmann auf dem Gebiet verstanden werden.

### Durch Fermentation gelockerte Teige:

Im Sinne der vorliegenden Erfindung umfassen durch Fermentation (Gärung) gelockerte Teige solche Teige, bei denen die Lockerung und Porenbildung mittels Mikroorganismen erfolgt, welche im Teig durch Fermentation Gas, in der Regel Kohlendioxid, zur Lockerung des Teiges erzeugen und abgeben. Solche Mikroorganismen umfassen insbesondere Hefen und Milchsäurebakterien. Durch Fermentation gelockerte Teige im Sinne der vorliegenden Erfindung sind insbesondere Hefeteige und Sauerteige.

### Physikalisch gelockerte Teige

Im Sinne der vorliegenden Erfindung umfassen physikalisch gelockerte Teige solche Teige, bei denen die Lockerung und Porenbildung physikalisch durch Aufschlagen mit Luft - mit oder ohne Druck - erfolgt oder bei denen die Lockerung und Porenbildung mit Wasserdampf erfolgt. Beispiele für mit Wasserdampf gelockerte Teige sind Blätterteige und Brandmassen. Bei Blätterteigen bilden die vielen durch Laminierung entstandenen Teig-Fett-Schichten eine Wasserdampfsperre, und der in der Backhitze entstehende Wasserdampf führt dann zu der typischen Blätterung der Backware.

### Chemisch getriebene Teige

Chemisch getriebene Teige sind im Sinne der vorliegenden Anmeldung solche, bei denen die Lockerung und Porenbildung durch chemische Reaktion von Säuren oder sauren Salzen mit einem Kohlendioxidträger wie Natriumhydrogencarbonat erfolgt. Chemisch getriebene Teige sind im Sinne der vorliegenden Anmeldung keine durch Fermentation gelockerten und keine physikalisch gelockerten Teige.

In einer Ausführungsform der Erfindung ist der Mehlverbesserer durch thermisches Entwässern einer wässrigen Lösung oder Suspension einer Magnesiumphosphatverbindung, die ein Molverhältnis von Mg:P von 0,4 - 0,6 : 1 aufweist, herstellbar. Bevorzugt verwendet man hierfür erfindungsgemäß Monomagnesiumorthophosphat. Dieses besitzt ein theoretisches Molverhältnis von Mg:P von 0,5 : 1,0. Die wässrige Lösung oder Suspension der Magnesiumphosphatverbindung, aus der der erfindungsgemäße Mehlverbesserer durch Entwässern erhältlich ist, muss nicht durch Lösen oder Suspendieren eines Magnesiumorthophosphates hergestellt sein. Sie kann auch durch das Einrühren einer Magnesiumverbindung in Phosphorsäure hergestellt werden.

Vorzugsweise erfolgt das Entwässern bei 140 bis 300 °C, besonders bevorzugt bei 180 bis 250 °C. Eine zu niedrige Entwässerungstemperatur hat den Nachteil einer unvollständigen bzw. zu geringen Pyrophosphatbildung. Eine zu hohe Entwässerungstemperatur hat den Nachteil, dass unerwünschte langkettige Magnesiumphosphate gebildet werden.

Der Mehlverbesserer kann mit Vorteil durch Entwässern im Drehrohr oder im Sprühturm hergestellt werden. Bei der Herstellung im Drehohr kann sowohl das Gleichstrom- als auch das Gegenstromverfahren angewendet werden. Man versprüht beim Gleichstromverfahren die Phosphatlösung durch eine in das Drehrohr reichende Flamme auf ein heißes Bett aus bereits entwässertem Produkt. Das Material wandert dann mit dem heißen Luftstrom zum Austragsende und wird dabei entwässert. Bei der Herstellung im Sprühturm wird die Phosphatlösung über Mehrstoffdüsen in den Sprühturmkopf versprüht. Im Sprühturmkopf wird durch Brenner eine Flammenzone erzeugt. Die eingesprühte Phosphatlösung bewegt sich im Gleichstrom mit den Brennergasen nach unten und wird dabei entwässert.

Der Mehlverbesserer enthält 30 bis 99 Gew.-% Pyrophosphat-P₂O₅ und 1 bis 70 Gew.-% Orthophosphat-P₂O₅, wobei sich die Gewichtsprozentangaben auf den Gesamt-P₂O₅-Gehalt im Mehlverbesserer beziehen. Besonders geeignet sind 90 bis 99 Gew.-% Pyrophosphat-P₂O₅ und 1 bis 10 Gew.-% Orthophosphat-P₂O₅.

Die Erfindung umfasst auch eine Zusammensetzung, welche Getreidemehl und eine auf das Gewicht des Getreidemehls bezogene Menge von 5 Gew.-ppm bis 3 Gew.-%, vorzugsweise 20 Gew.-ppm bis 0,5 Gew.-%, besonders bevorzugt 50 Gew.-ppm bis 0,1 Gew.-% des hierin beschriebenen Mehlverbesserers enthält, welcher saures Magnesiumpyrophosphat (Magnesiumdihydrogendiphosphat) und wenigstens Magnesiumorthophosphat enthält, einen Glühverlust von 7,5 bis 13,5 %, vorzugsweise von 9 bis 11,5 % aufweist und 30 bis 99 Gew.-% Pyrophosphat-P₂O₅ und 1 bis 70 Gew.-% Orthophosphat-P₂O₅ enthält, wobei sich die Gewichtsprozentangaben auf den Gesamt-P₂O₅-Gehalt im Mehlverbesserer beziehen.

In einer besonders bevorzugten Ausführungsform der Erfindung ist die erfindungsgemäße Zusammensetzung, welche den erfindungsgemäßen Mehlverbesserer enthält, ein Mehl für die Herstellung von Backwaren, ganz besonders bevorzugt ein Weizenmehl. Wenn hier die Zusammensetzung als ein Mehl bezeichnet wird, so meint dies eine Zusammensetzung, die als Hauptbestandteil Mehl (mehr als 85 Gew.-%) enthält und den erfindungsgemäßen Mehlverbesserer sowie gegebenenfalls weitere in geringen Mengen zugesetzte Mehladditive.

In einer weiteren bevorzugten Ausführungsform der Erfindung ist die erfindungsgemäße Zusammensetzung, welche den erfindungsgemäßen Mehlverbesserer enthält, eine Backmischung für die Herstellung von Backwaren. Unter einer Backmischung wird in diesem Kontext eine Zusammensetzung verstanden, die bereits vorgemischt alle wesentlichen Trockenbestandteile für die Herstellung eines Teiges beinhaltet. Für die Teigbereitung wird der Backmischung im Wesentlichen nur noch Wasser zugesetzt, wobei die weitere Zugabe von Additiven oder Aromen etc. nicht ausgeschlossen ist.

In einer weiteren bevorzugten Ausführungsform der Erfindung ist die erfindungsgemäße Zusammensetzung, welche den erfindungsgemäßen Mehlverbesserer enthält, ein durch Fermentation gelockerter Teig oder ein physikalisch gelockerter Teig für Backwaren. Es hat sich überraschenderweise gezeigt, dass sich die Zugabe des erfindungsgemäßen Mehlverbesserers bei durch Fermentation gelockerten Teigen und bei physikalisch gelockerten Teigen besonders vorteilhaft auf die Teigherstellung, die Teigverarbeitung und die Eigenschaften der daraus hergestellten Backwaren auswirkt. Die Zugabe des erfindungsgemäßen Mehlverbesserers liefert beispielsweise eine hervorragende Dehnbarkeit und einen guten Dehnwiderstand des Teiges und eine verbesserte Krume der hergestellten Backware. Gegenüber der Verwendung von Ascorbinsäure als Mehlverbesserer konnte mit dem erfindungsgemäßen Mehlverbesserer eine geringere Anfälligkeit für ein Abreißen des Teiges von der Kruste des Gebäcks, d. h. eine höhere Gärtoleranz, erzielt werden.

Die Erfindung umfasst weiterhin ein Verfahren zur Herstellung eines Teiges für eine Backware unter Verwendung des Mehlverbesserers, beim dem man eine Zusammensetzung der oben beschriebenen erfindungsgemäßen Art herstellt, indem man zuerst den Mehlverbesserer und gegebenenfalls weitere Teigbestandteile mit einem Teil oder der gesamten Menge des für den Teig erforderlichen Mehls als trockene Substanzen mischt und anschließend die trockenen Teigbestandteile mit Wasser mischt. Ein Einarbeiten des erfindungsgemäßen Mehlverbesserers in einen bereits feuchten Teig hat sich als nachteilig erwiesen, da eine ausreichend homogene Verteilung des Mehlverbesserers in dem Teig nicht oder nur durch sehr langes und intensives Kneten erzielt werden kann, was wiederum Nachteile für die Teigbeschaffenheit mit sich bringt und die Kosten und die Dauer der Teigherstellung erhöht.

Die Erfindung wird nun anhand von Beispielen weiter erläutert, die den Schutzumfang der Erfindung nicht beschränken.

### Beispiel 1 - Teigrheologie

Zur Messung der Teigrheologie wurden nach ICC-Standard Nr. 114/1 vier Teigansätze aus jeweils 300 g Mehl Type 550, 6 g Salz und Wasser hergestellt und nach Vorschrift bearbeitet. In die vier Teigansätze wurden Zusätze gemäß nachfolgender Tabelle 1 eingearbeitet. Die eingesetzten Wassermengen wurde so eingestellt, dass die Teigansätze gleiche Konsistenz von 500 BE hatten. Aus jedem Teigansatz wurden Teigstränge von jeweils 150 g hergestellt und für 45 min oder 135 min bei 30°C ruhen gelassen. Anschließend wurden Extensogramme mit einem Brabender Extensographen in Dreifachbestimmung aufgenommen.

**Tabelle 1: Teigansätze für die Bestimmung der Teigrheologie**

| Teigansatz | Zusatz | Menge | Wassermenge (g / 300g Mehl) |
|---|---|---|---|
| A1 (Vergleich) | --- | --- | 183,9 |
| B1 (Vergleich) | Ascorbinsäure | 20 ppm | 179,7 |
| C1 (Erfindung) | MgPP | 60 ppm | 177,9 |
| D1 (Erfindung) | MgPP | 1 Gew.-% | 177,6 |

| | | | |
|---|---|---|---|
| MgPP = erfindungsgemäßer Mehlverbesserer mit Magnesiumpyrophosphat und Magnesiumorthophosphat mit 95,8 Gew.-% Pyrophosphat-P₂O₅ und 4,2 Gew.-% Orthophosphat-P₂O₅. | | | |

Die Ergebnisse der Bestimmungen des Dehnwiderstandes und der Dehnbarkeit sind in den nachfolgenden Tabellen 2 und 3 wiedergegeben.

**Tabelle 2: Bestimmungen des Dehnwiderstandes und der Dehnbarkeit der Teigzubereitung nach 45 min**

| Teigansatz | Dehnwiderstand in BE (45 min) | Dehnbarkeit in mm (45 min) | Dehnwiderstand (% gegenüber A) | Dehnbarkeit (% gegenüber A) |
|---|---|---|---|---|
| A1 (Vergleich) | 250 | 188 | 100 | 100 |
| B1 (Vergleich) | 330 | 178 | 132 | 95 |
| C1 (Erfindung) | 330 | 174 | 132 | 93 |
| D1 (Erfindung) | 230 | 172 | 92 | 91 |

**Tabelle 3: Bestimmungen des Dehnwiderstandes und der Dehnbarkeit der Teigzubereitung nach 135 min**

| Teigansatz | Dehnwiderstand in BE (135 min) | Dehnbarkeit in mm (135 min) | Dehnwiderstand (% gegenüber A) | Dehnbarkeit (% gegenüber A) |
|---|---|---|---|---|
| A1 (Vergleich) | 410 | 155 | 100 | 100 |
| B1 (Vergleich) | 510 | 148 | 124 | 95 |
| C1 (Erfindung) | 520 | 155 | 127 | 100 |
| D1 (Erfindung) | 520 | 140 | 127 | 90 |

| | | | | |
|---|---|---|---|---|
| "BE" = Brabender Einheiten | | | | |

Bei einem Zusatz von 60 ppm des erfindungsgemäßen Mehlverbesserers (Teig C1) nimmt der Dehnwiderstand gegenüber einem Teig ohne Zusatz (Teig A1) um über 30% zu und die Dehnbarkeit wird tendenziell niedriger. Die Teigstärkung ist vergleichbar mit dem Zusatz von 20 ppm Ascorbinsäure (Teig B1). Eine hohe Dosierung von 1% des erfindungsgemäßen Mehlverbesserers (Teig D1) führte zwar zu einer Verringerung des Dehnwiderstandes in der frühen Phase der Teigbereitung (45 min), im weiteren Verlauf (135 min) hatte aber auch diese hohe Dosierung eine teigstärkende Wirkung.

### Beispiel 2 - Herstellung von Weißbrot

Der in diesem Beispiel verwendete Grundteig hatte folgende Rezeptur:

| | Menge [Gramm] | Gewichtsteile |
|---|---|---|
| Weizenmehl (Type 550 nach DIN 10355) | 1841 | 100 |
| Wasser | 1128 | 60 |
| Hefe | 56 | 3 |
| Salz | 37 | 2 |

Es wurden vier verschiedene Teigansätze hergestellt und Zusätze gemäß nachfolgender Tabelle 4 eingearbeitet. Die Zusätze wurden dem trockenen Mehl vor der Zugabe des Wassers und der übrigen Teigbestandteile intensiv zugemischt, um eine gleichmäßige Verteilung zu erreichen. Die Gärung der Teige erfolgte bei 35°C und 80% relativer Luftfeuchte.

**Tabelle 4: Teigansätze für die Herstellung von Weißbrot**

| Teigansatz | Zusatz | Menge |
|---|---|---|
| A2 (Vergleich) | --- | --- |
| B2 (Vergleich) | Ascorbinsäure | 20 ppm |
| C2 (Erfindung) | MgPP | 60 ppm |
| D2 (Erfindung) | MgPP | 1 Gew.-% |

| | | |
|---|---|---|
| MgPP = erfindungsgemäßer Mehlverbesserer mit Magnesiumpyrophosphat und Magnesiumorthophosphat mit 95,8 Gew.-% Pyrophosphat-P₂O₅ und 4,2 Gew.-% Orthophosphat-P₂O₅. | | |

Aus den Teigen wurde offenes Kastenweißbrot sowohl nach Normalgare (NG: 35°C, 80% rel. Luftfeuchte, 85 min) als auch nach Übergare (ÜG: 35°C, 80% rel. Luftfeuchte, 100 min) der Teige gebacken und die Krumenbeschaffenheit bewertet. Die Ergebnisse sind in der nachfolgenden Tabelle 5 wiedergegeben.

**Tabelle 5: Bewertung der Krumenbeschaffenheit von Kastenweißbrot aus den Teigen A2 bis D2**

| Teig | Krumenbeschaffenheit | | | |
|---|---|---|---|---|
| | Normalgare (NG) | | Übergare (ÜG) | |
| A2 (Vergleich) | 4 | gebäcktypisch | 5 | etwas weich |
| B2 (Vergleich) | 4 | gebäcktypisch | 5 | etwas weich |
| C2 (Erfindung) | 5 | etwas weich | 6 | weich |
| D2 (Erfindung) | 5 | etwas weich | 6 | weich |

Die Bewertung der Krumenbeschaffenheit erfolgte auf einer Skala von 1 bis 6, wobei der Wert 4 einer gebäcktypischen Krumenbeschaffenheit entspricht.

Die Krumenbeschaffenheit der mit dem erfindungsgemäßen Mehlverbesserer gebackenen Kastenweißbrote (Teige C2 und D2) war weicher als bei den Broten ohne Zusatz (Teig A2) oder mit Ascorbinsäure (Teig B2). Sie wirkten dadurch frischer. Außerdem war insbesondere bei den mit übergarem Teig gebackenen Kastenweißbroten deutlich zu erkennen, dass die Brote mit dem Zusatz von erfindungsgemäßem Mehlverbesserer (Teige C2 und D2) beim Backen weniger zum Abreißen der Kruste neigten und damit eine höhere Gärtoleranz aufwiesen als die Brote ohne Zusatz (Teig A2) oder mit Ascorbinsäure (Teig B2).

### Beispiel 3 - Herstellung von Rundstücken mit Gärunterbrechung

Der in diesem Beispiel verwendete Grundteig hatte folgende Rezeptur:

| | Menge [Gramm] | Gewichtsteile |
|---|---|---|
| Weizenmehl (Type 550 nach DIN 10355) mit 10 ppm Ascorbinsäure | 4000 | 100 |
| Salz | 80 | 2 |
| Zucker | 40 | 1 |
| Hefe | 200 | 5 |
| Wasser | 2400 | 60 |

Es wurden zwei verschiedene Teigansätze hergestellt, nämlich der oben genannte Grundteig ohne weitere Zusätze und der Grundteig mit einem Zusatz von 0,5 Gew.-% MgPP (= erfindungsgemäßer Mehlverbesserer mit Magnesiumpyrophosphat und Magnesiumorthophosphat mit 95,8 Gew.-% Pyrophosphat-P₂O₅ und 4,2 Gew.-% Orthophosphat-P₂O₅).

Aus jedem der Teigansätze wurden jeweils 10 Rundstücke hergestellt. Die Teiglinge wurden für 1 h bei -20°C gekühlt, anschließend bei -18°C über 7 h gehalten, bei +8°C für 4 h aufgetaut und danach für 2 h bei 28°C und 70% rel. Luftfeuchte gären gelassen. Anschließend wurden die Rundstücke im Backofen für 2 min bei 240°C und weiter für 18 min bei 220°C, die letzten 5 min mit offenem Zug, gebacken und das spezifische Volumen der aus den verschiedenen Teigansätzen gebackenen Rundstücke bestimmt. Das spezifische Volumen der Rundstücke aus dem Grundteig ohne MgPP betrug 4,76 ml/g und das spezifische Volumen der Rundstücke aus dem Grundteig mit 0,5 Gew.-% MgPP betrug 5,08 ml/g und war somit um 6% höher als ohne MgPP.

## Patentansprüche

1. Verwendung eines Mehlverbesserers zur Herstellung von durch Fermentation gelockerten Teigen oder physikalisch gelockerten Teigen für Backwaren oder zur Herstellung von Mehl, wobei der Mehlverbesserer saures Magnesiumpyrophosphat (Magnesiumdihydrogendiphosphat) und wenigstens Magnesiumorthophosphat enthält, einen Glühverlust von 7,5 bis 13,5 %, vorzugsweise von 9 bis 11,5 % aufweist und 30 bis 99 Gew.-% Pyrophosphat-P₂O₅ und 1 bis 70 Gew.-% Orthophosphat-P₂O₅ enthält, wobei sich die Gewichtsprozentangaben auf den Gesamt-P₂O₅-Gehalt im Mehlverbesserer beziehen.

2. Verwendung nach Anspruch 1, **dadurch gekennzeichnet, dass** der Mehlverbesserer 90 bis 99 Gew.-% Pyrophosphat-P₂O₅ und 1 bis 10 Gew.-% Orthophosphat-P₂O₅ enthält, wobei sich die Gewichtsprozentangaben auf den Gesamt-P₂O₅-Gehalt im Mehlverbesserer beziehen.

3. Verwendung nach einem der vorangegangenen Ansprüche, **dadurch gekennzeichnet, dass** der Mehlverbesserer durch Entwässern einer wässrigen Lösung oder Suspension einer Magnesiumphosphatverbindung, die ein Molverhältnis von Mg:P von 0,4-0,6 : 1 aufweist, herstellbar ist, vorzugsweise durch Entwässern bei 140 bis 300 °C, besonders bevorzugt durch Entwässern bei 180 bis 250 °C.

4. Zusammensetzung, welche Getreidemehl und eine auf das Gewicht des Getreidemehls bezogene Menge von 5 Gew.-ppm bis 3 Gew.-%, vorzugsweise 20 Gew.-ppm bis 0,5 Gew.-%, besonders bevorzugt 50 Gew.-ppm bis 0,1 Gew.-% eines Mehlverbesserers enthält, welcher saures Magnesiumpyrophosphat (Magnesiumdihydrogendiphosphat) und wenigstens Magnesiumorthophosphat enthält, einen Glühverlust von 7,5 bis 13,5 %, vorzugsweise von 9 bis 11,5 % aufweist und 30 bis 99 Gew.-% Pyrophosphat-P₂O₅ und 1 bis 70 Gew.-% Orthophosphat-P₂O₅ enthält, wobei sich die Gewichtsprozentangaben auf den Gesamt-P₂O₅-Gehalt im Mehlverbesserer beziehen.

5. Zusammensetzung nach Anspruch 4, **dadurch gekennzeichnet, dass** der Mehlverbesserer durch Entwässern einer wässrigen Lösung oder Suspension einer Magnesiumphosphatverbindung, die ein Molverhältnis von Mg:P von 0,4 - 0,6 : 1 aufweist, herstellbar ist, vorzugsweise durch Entwässern bei 140 bis 300 °C, besonders bevorzugt durch Entwässern bei 180 bis 250 °C..

6. Zusammensetzung nach einem der Ansprüche 4 oder 5, **dadurch gekennzeichnet, dass** der Mehlverbesserer 90 bis 99 Gew.-% Pyrophosphat-P₂O₅ und 1 bis 10 Gew.-% Orthophosphat-P₂O₅ enthält, wobei sich die Gewichtsprozentangaben auf den Gesamt-P₂O₅-Gehalt im Mehlverbesserer beziehen.

7. Zusammensetzung nach einem der Ansprüche 4 bis 6, **dadurch gekennzeichnet, dass** die Zusammensetzung ein durch Fermentation gelockerter Teig oder ein physikalisch gelockerter Teig für Backwaren, ein Mehl für die Herstellung von Backwaren oder eine Backmischung für die Herstellung von Backwaren ist.

8. Verfahren zur Herstellung eines Teiges für eine Backware, **dadurch gekennzeichnet, dass** man eine Zusammensetzung nach einem der Ansprüche 4 bis 7 herstellt, indem man zuerst den Mehlverbesserer und gegebenenfalls weitere Teigbestandteile mit einem Teil oder der gesamten Menge des für den Teig erforderlichen Mehls als trockene Substanzen mischt und anschließend die trockenen Teigbestandteile mit Wasser mischt.

## Claims

1. Use of a flour improver for the production of doughs loosened by fermentation or physically loosened doughs for bakery products or for the production of flour, wherein the flour improver contains acid magnesium pyrophosphate (magnesium dihydrogen diphosphate) and at least magnesium orthophosphate, has a loss on ignition of from 7.5 to 13.5%, preferably of from 9 to 11.5%, and contains from 30 to 99% by weight of pyrophosphate expressed as P₂O₅ and from 1 to 70% by wt of orthophosphate expressed as P₂O₅, wherein the percentages by weight refer to the total P₂O₅ content in the flour improver.

2. Use as set forth in claim 1, **characterized in that** the flour improver contains from 90 to 99% by wt of pyrophosphate expressed as P₂O₅ and from 1 to 10% by wt of orthophosphate expressed as P₂O₅, wherein the percentages by weight refer to the total P₂O₅ content in the flour improver.

3. Use as set forth in one of the preceding claims, **characterized in that** the flour improver is producible by removing water from an aqueous solution or suspension of a magnesium phosphate compound which has a molar ratio of Mg:P of 0.4 - 0.6:1, preferably by removing water at between 140 and 300°C, particularly preferably by removing water at from 180 to 250°C.

4. A composition which contains cereal flour and a flour improver in an amount from 5 ppm by weight to 3% by wt, preferably 20 ppm by weight to 5% wt, particularly preferably 50 ppm by weight to 0.1% by wt, related to the weight of the cereal flour, wherein the flour improver contains acid magnesium pyrophosphate (magnesium dihydrogen diphosphate) and at least magnesium orthophosphate, and has a loss on ignition of from 7.5 to 13.5%, preferably of from 9 to 11.5%, and contains from 30 to 99% by wt of pyrophosphate expressed as P₂O₅ and from 1 to 70% by wt of orthophosphate expressed as P₂O₅, wherein the percentages by weight refer to the total P₂O₅ content in the flour improver.

5. A composition as set forth in claim 4, **characterized in that** the flour improver is producible by removing water from an aqueous solution or suspension of a magnesium phosphate compound which has a molar ratio of Mg:P of 0.4 - 0.6:1, preferably by removing water at from 140 to 300°C, particularly preferably by removing water at from 180 to 250°C.

6. A composition as set forth in one of claims 4 or 5, **characterized in that** the flour improver contains from 90 to 99% by wt of pyrophosphate expressed as P₂O₅ and from 1 to 10% by wt of orthophosphate expressed as P₂O₅, wherein the percentages by weight refer to the total P₂O₅ content in the flour improver.

7. A composition as set forth in one of claims 4 to 6, **characterized in that** the composition is a dough loosened by fermentation or a physically loosened dough for bakery products, a flour for the production of bakery products or a baking mixture for the production of bakery products.

8. A method for the production of a dough for a bakery product, **characterized in that** a composition as set forth in one of claims 4 to 7 is produced by mixing as dry substances at first the flour improver and optionally further dough components with a part or the total amount of the flour required for the dough and by mixing thereafter the dry dough constituents with water.

## Revendications

1. Utilisation d'un améliorant pour farine pour la fabrication de pâtes levées par fermentation ou de pâtes levées de manière physique pour des produits de boulangerie ou pour la production de farine, dans laquelle l'améliorant pour farine contient du pyrophosphate acide de magnésium (dihydrogénodiphosphate de magnésium) et au moins de l'orthophosphate de magnésium, présente une perte au feu comprise entre 7,5 et 13,5 %, de manière préférée comprise entre 9 et 11,5 %, et contient entre 30 et 99 % en poids de pyrophosphate P₂O₅ et entre 1 et 70 % en poids d'orthophosphate P₂O₅, les pourcentages en poids se rapportant à la teneur totale en P₂O₅ dans l'améliorant pour farine.

2. Utilisation selon la revendication 1, **caractérisée en ce que** l'améliorant pour farine contient entre 90 et 99 % en poids de pyrophosphate P₂O₅ et entre 1 et 10 % en poids d'orthophosphate P₂O₅, les pourcentages en poids se rapportant à la teneur totale en P₂O₅ dans l'améliorant pour farine.

3. Utilisation selon l'une quelconque des revendications précédentes, **caractérisée en ce que** l'améliorant pour farine peut être préparé par déshydratation d'une solution ou suspension aqueuse d'un composé de phosphate de magnésium présentant un rapport molaire de Mg:P compris entre 0,4:1 et 0,6:1, de manière préférée par déshydratation entre 140°C et 300 °C, de manière plus préférée par déshydratation entre 180 et 250 °C.

4. Composition contenant de la farine de céréales et une quantité, rapportée au poids de la farine de céréales, comprise entre 5 ppm en poids et 3 % en poids, de manière préférée comprise entre 20 ppm en poids et 0,5 % en poids, de manière particulièrement préférée comprise entre 50 ppm en poids et 0,1 % en poids, d'un améliorant pour farine qui contient du pyrophosphate acide de magnésium (dihydrogénodiphosphate de magnésium) et au moins de l'orthophosphate de magnésium, présente une perte au feu comprise entre 7,5 et 13,5 %, de manière préférée comprise entre 9 et 11,5 %, et contient entre 30 et 99 % en poids de pyrophosphate P₂O₅ et entre 1 et 70 % en poids d'orthophosphate P₂O, les pourcentages en poids se rapportant à la teneur totale en P₂O₅ dans l'améliorant pour farine.

5. Composition selon la revendication 4, **caractérisée en ce que** l'améliorant pour farine peut être préparé en déshydratant une solution ou suspension aqueuse d'un composé de phosphate de magnésium présentant un rapport molaire de Mg:P compris entre 0,4:1 et 0,6:1, de manière préférée par déshydratation entre 140 et 300 °C, de manière plus préférée par déshydratation entre 180 et 250 °C.

6. Composition selon l'une des revendications 4 ou 5, **caractérisée en ce que** l'améliorant pour farine contient entre 90 et 99 % en poids de pyrophosphate P₂O₅ et entre 1 et 10 % en poids d'orthophosphate P₂O₅, les pourcentages en poids se rapportant à la teneur totale en P₂O₅ dans l'améliorant pour farine.

7. Composition selon l'une des revendications 4 à 6, **caractérisée en ce que** la composition est une pâte levée par fermentation ou une pâte levée de manière physique pour produits de boulangerie, une farine pour la fabrication de produits de boulangerie ou un mélange boulanger pour la fabrication de produits de boulangerie.

8. Procédé de préparation d'une pâte pour produits de boulangerie, **caractérisé en ce que** l'on prépare une composition selon l'une des revendications 4 à 7 en mélangeant en tant que substances sèches d'abord l'améliorant pour farine et éventuellement d'autres ingrédients de pâte avec une partie ou la totalité de la farine nécessaire à la pâte, et en mélangeant ensuite les ingrédients de pâte secs avec de l'eau.
